## Europäisches Patentamt
## European Patent Office
## Office européen des brevets

(11) Publication number: **0 067 030**
**B1**

(12) **EUROPEAN PATENT SPECIFICATION**

(45) Date of publication of patent specification: **02.09.87**

(51) Int. Cl.⁴: $H\ 01\ J\ 61/42$

(21) Application number: **82302827.9**

(22) Date of filing: **02.06.82**

(54) **A fluorescent lamp.**

(30) Priority: **09.06.81 JP 87438/81**

(43) Date of publication of application:
**15.12.82 Bulletin 82/50**

(45) Publication of the grant of the patent:
**02.09.87 Bulletin 87/36**

(84) Designated Contracting States:
**DE FR GB IT NL**

(56) References cited:
**GB-A-2 023 924**
**GB-A-2 033 653**
**US-A-3 328 620**
**US-A-3 887 725**
**US-A-4 026 816**

**"Licht, Beleuchtung und Sehen in der Arbeitswelt", Verlag Tribüne, Berlin 1979**
**H. J. Hentschel "Licht und Beleuchtung, Dr A Hütig Verlag, Heidelberg 1982**

(73) Proprietor: **Kabushiki Kaisha Toshiba**
**72, Horikawa-cho Saiwai-ku**
**Kawasaki-shi Kanagawa-ken 210 (JP)**

(72) Inventor: **Ebara, Hiroyuki c/o Patent Division**
**Tokyo Shibaura Denki K.K. 72, Horikawa-cho**
**Saiwai-ku Kawasaki-shi Kanagawa-ken, 210 (JP)**
Inventor: **Kamei, Taketo c/o Patent Division**
**Tokyo Shibaura Denki K.K. 72, Horikawa-cho**
**Saiwai-ku Kawasaki-shi Kanagawa-ken, 210 (JP)**
Inventor: **Oda, Kenji c/o Patent Division**
**Tokyo Shibaura Denki K.K. 72, Horikawa-cho**
**Saiwai-ku Kawasaki-shi Kanagawa-ken, 210 (JP)**

(74) Representative: **Newstead, Michael John et al**
**Haseltine Lake & Co. 28 Southampton Buildings**
**Chancery Lane**
**London, WC2A 1AT (GB)**

Courier Press, Leamington Spa, England.

**Description**

The present invention relates to a fluorescent lamp, for example to a compact fluorescent lamp having a vacuum-tight radiation transmitting tube including at least one U-shaped portion.

Fluorescent lamps are widely used because of their high luminous efficiency in comparison with incandescent lamps and it is advantageous to use fluorescent lamps instead of incandescent lamps from the standpoint of electric power consumption.

In order to replace an incandescent lamp with a fluorescent lamp, it is necessary for a fluorescent lamp to be compact, for example with a vacuum-tight radiation transmitting tube including a U-shaped portion or even three U-shaped portions, to obtain a light output as great as that of an incandescent lamp. Consequently, the diameter of the tube must be small in accordance with the size of the compact lamp. For example, United Kingdom Patent Application Publication No. 2,033,653 describes such a compact fluorescent lamp.

Owing to the reduction of the envelope diameter, not only wall loading ($W/m^2$: lamp watts per square metre) but also the ampere density of the fluorescent lamp are increased. Moreover, the output of ultraviolet radiation having wavelengths of about 185 nanometer (nm) and about 254 nm is increased. Generally, ultraviolet radiation having a wavelength of about 254 nm is converted to visible radiation by the phosphor layer but that having a wavelength of about 185 nm wavelength radiation is not efficiently converted to visible radiation by the phosphor. Moreover, 185 nm wavelength radiation damages conventional phosphors, such as calcium halophosphate phosphors which are now used in almost all types of fluorescent lamps for general illumination purposes. So, it is impossible to obtain the desired output.

According to the present invention there is provided a compact fluorescent lamp for general illumination purposes comprising: a vacuum-tight radiation transmitting tube; mercury and rare gas in said tube; electrodes in said tube between which discharge takes place during operation; and a phosphor layer coating a surface of said tube, said phosphor layer including a mixture of red, green and blue light-emitting phosphors, characterised in that the tube is convoluted and has a wall loading in the range of 600—900 $W/m^2$ and that at least 40 percent by weight of said phosphor layer consists of said red light-emitting phosphor.

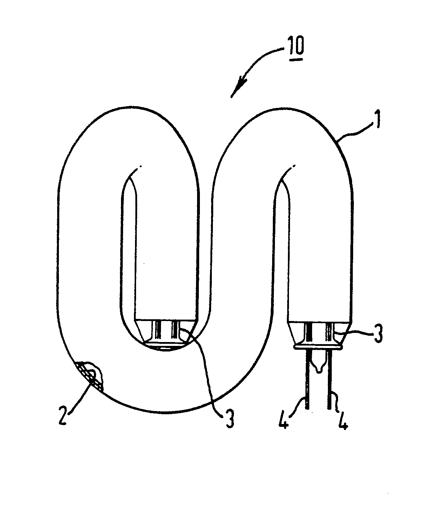

The present invention will now be described by way of example with reference to the single figure of the accompanying drawing, which is a perspective view, partly broken away, of a compact fluorescent lamp.

Referring now to the figure, reference numeral 10 designates a compact fluorescent lamp for 100V 15W having a vitreous convoluted tube 1. The inner surface of the tube 1 is coated with a phosphor layer 2. Respective stems 3 are sealed in each end of the tube 1, each stem comprising an electrode supported by lead-in wires 4. The tube 1 encloses a quantity of mercury and a quantity of rare gas to sustain during operation a low pressure, ultraviolet generating discharge between the electrodes. Selection of the quantity of mercury and rare gas is made in the same manner as for conventional fluorescent tubes and is well known in the art. The inner diameter of the tube 1 is about 15 mm and the wall loading of the tube 1 is about 705 $W/m^2$.

Any suitable phosphors may be used. As a blue light-emitting phosphor, one may select at least one from a strontium calcium halophosphate activated by europium; barium magnesium aluminate activated by europium; a strontium calcium barium halo-boro-phosphate activated by europium; and strontium chlorophosphate activated by europium. As a green light-emitting phosphor, one may select at least one from lanthanum phosphate activated by cerium and terbium; magnesium aluminate activated by cerium and terbium; yttrium silicate activated by cerium and terbium; and lanthanum silicophosphate activated by cerium and terbium. As a red light-emitting phosphor, one may select yttrium oxide activated by europium.

A mixed phosphor is made by using three kinds of phosphors mixed in the proper ratio, e.g. as a blue light-emitting phosphor, a strontium calcium chlorophosphate activated by europium ($3 Sr_3(PO_4)_2CaCl_2/Eu$) (hereinafter called a "B" phosphor); as a green light-emitting phosphor, yttrium silicate activated by cerium and terbium ($Y_2SiO_5/Ce,Tb$) (hereinafter called a "G" phosphor), and as a red light-emitting phosphor, yttrium oxide activated by europium ($Y_2O_3/Eu$) (hereinafter called a "R" phosphor).

The present inventors have produced a compact fluorescent lamp with a convoluted tube for 100V 15W capable of achieving a colour temperature of 3,000 K by using the above mentioned "B", "G" and "R" phosphors. The specific luminous flux (%) and the lumen maintenance factor (%) have been tested after lighting for 1,000 hours. The results, including values obtained when using a conventional phosphor layer as a reference, are shown in the following Table 1.

TABLE 1

| Test number | Phosphors | | | Colour temperature (K) | Specific luminous flux (%) | Lumen maintenance factor (%) |
|---|---|---|---|---|---|---|
| | Kind | Mixture ratio (weight %) | Average particle diameter of R phosphor (μ) | | | |
| 1 | B | 2 | 4.0 | 3,000 | 116 | 91 |
| | G | 43 | | | | |
| | R | 55 | | | | |
| 2 | B | 2.5 | 3.1 | 3,000 | 114.5 | 90 |
| | G | 47.5 | | | | |
| | R | 50 | | | | |
| 3 | B | 3 | 2.2 | 3,000 | 113 | 88 |
| | G | 54 | | | | |
| | R | 43 | | | | |
| 4 | B | 3.5 | 1.8 | 3,000 | 112 | 86 |
| | G | 56.5 | | | | |
| | R | 40 | | | | |
| 5 | B | 4 | 1.5 | 3,000 | 110 | 80 |
| | G | 59 | | | | |
| | R | 37 | | | | |
| Conventional phosphor layer | | | | 3,000 | 100 | 85 |

As shown in the Table 1, the specific luminous flux (%) is relatively high for test numbers 1 to 4, and there is substantially no deterioration of the specific luminous flux after lighting for 1,000 hours in comparison with using the conventional phosphor layer. However, the drop of the lumen maintenance factor is outstanding for test number 5 although the specific luminous flux is high in comparison with that obtained when using the conventional phosphor layer. It is considered that this is due to the fact that the proportion of "R" phosphor is low (less than 40% by weight), so that the "B" and "G" phosphors are deteriorated by 185 nm wavelength ultraviolet radiation. Therefore, it can be understood that the mixture ratio of the above "R" phosphor is required to be at least 40% by weight in order to obtain at least the same lumen maintenance factor as that achieved when using the conventional phosphor layer.

In addition, the present inventors have prepared other mixed phosphors (i) and (ii) (shown in the following Table 2) using other "B" and "G" phosphors in the proper ratio. Tests have been done in respect of a compact fluorescent lamp for 100V 15W. The results are shown in the following Table 3.

TABLE 2

| Mixture phosphor | Phosphors | | |
|---|---|---|---|
| | Blue phosphor | Green phosphor | Red phosphor |
| (i) | $3 Sr_3(PO_4) \cdot Ca Cl_2/Eu$ | $LaPO_4/Ce, Tb$ | $Y_2O_3/Eu$ |
| | B phosphor | $G_1$ phosphor | R phosphor |
| (ii) | $BaMg_2Al_{16}O_{27}/Eu$ | $MgAl_{11}O_{19}/Ce, Tb$ | $Y_2O_3/Eu$ |
| | $B_1$ phosphor | $G_2$ phosphor | R phosphor |

4

# 0 067 030

TABLE 3

| Test number | Mixture phosphor | Phosphor | | | Colour temperature (K) | Specific luminous flux (%) |
|---|---|---|---|---|---|---|
| | | Kind | Average particle diameter (μ) | Mixture ratio (weight %) | | |
| 6 | (i) | B | 5.0 | 2 | 3,000 | 117 |
| | | $G_1$ | 4.5 | 38 | | |
| | | R | 2.2 | 60 | | |
| 7 | (i) | B | 5.0 | 2 | 3,000 | 119 |
| | | $G_1$ | 4.5 | 32 | | |
| | | R | 4.0 | 66 | | |
| 8 | (ii) | B | 3.0 | 1.7 | 3,000 | 113 |
| | | $G_2$ | 4.0 | 34.3 | | |
| | | R | 2.2 | 63 | | |
| 9 | (ii) | $B_1$ | 3.0 | 1.5 | 3,000 | 116 |
| | | $G_2$ | 4.0 | 30.5 | | |
| | | R | 4.0 | 68 | | |
| 10 | (i) | B | 5.0 | 16 | 4,200 | 114 |
| | | $G_1$ | 4.5 | 40 | | |
| | | R | 2.2 | 44 | | |
| 11 | (i) | B | 5.0 | 14 | 4,200 | 116.5 |
| | | $G_1$ | 4.5 | 37 | | |
| | | R | 4.0 | 49 | | |

As shown in the above Table 3, if the "R" phosphor (red light-emitting phosphor) is at least 40% by weight of the mixture phosphor, it is possible to obtain the desired colour temperature and excellent specific luminous flux. This does not depend on the mixture ratio of the "B" phosphor (blue light-emitting phosphor) and the "G" phosphor (green light-emitting phosphor).

In the case of a wall loading is smaller than 600 $W/m^2$, the effect in accordance with the invention is little because the deterioration of the phosphor due to the 185 nm wavelength ultraviolet radiation is little.

On the other hand, in the case of a wall loading larger than 900 $W/m^2$, the temperature of the convoluted tube increases. As a result, the mercury vapour pressure in the air-tight tube becomes high, and thus the luminous efficiency is decreased.

Another experiment using two phosphor layers has been carried out. That is, a first phosphor layer, disposed directly on the inner surface of the convoluted tube, is composed of a calcium halophosphate activated by antimony and manganese. A second phosphor layer coated on the first phosphor layer is composed of the same component as shown in Test number 7 in the Table 3.

As regards the specific luminous flux and the operative characteristics, the result has been shown to have the same effect as is shown in the Table 3.

It is considered that this is attributable to the fact that the 185 nm wavelength ultraviolet radiation was converted to visible light by the red light-emitting phosphor in the second phosphor layer and does not reach the first phosphor layer (composed of a calcium halophosphate activated by antimony and manganese).

The vacuum-tight radiation transmitting convoluted tube 1 has at least one U-shaped portion and a

5

wall loading in the range of 600—900 W/m² and an inner diameter of the tube in the range of 10—20 mm are suitable for practical use.

## Claims

1. A compact fluorescent lamp (10) for general illumination purposes comprising: a vacuum-tight radiation transmitting tube (1); mercury and rare gas in said tube; electrodes (3) in said tube between which discharge takes place during operation; and a phosphor layer (2) coating a surface of said tube, said phosphor layer including a mixture of red, green and blue light-emitting phosphors, characterised in that the tube is convoluted and has a wall loading in the range of 600—900 W/m² and that at least 40 percent by weight of said phosphor layer consists of said red light-emitting phosphor.

2. A fluorescent lamp according to claim 1, wherein said phosphor layer is disposed directly on an inner surface of said tube.

3. A fluorescent lamp according to claim 1, further comprising another phosphor layer disposed between said phosphor layer and said tube.

4. A fluorescent lamp according to claim 3, wherein said other phosphor layer includes a calcium halophosphate phosphor.

5. A fluorescent lamp according to any preceding claim, wherein said red light-emitting phosphor comprises yttrium oxide activated by europium.

6. A fluorescent lamp according to any preceding claim, wherein said phosphor layer includes a blue light-emitting phosphor and a green light-emitting phosphor.

7. A fluorescent lamp according to claim 6, wherein said blue light-emitting phosphor is at least one of: a strontium calcium halophosphate activated by europium; barium magnesium aluminate activated by europium; a strontium calcium barium halo-boro-phosphate activated by europium; and strontium chlorophosphate activated by europium, and said green light-emitting phosphor is at least one of lanthanum phosphate activated by cerium and terbium; magnesium aluminate activated by cerium and terbium; yttrium silicate activated by cerium and terbium; and lanthanum silicophosphate activated by cerium and terbium.

8. A fluorescent lamp according to any preceding claim, wherein said tube includes at least one U-shaped portion.

9. A fluorescent lamp according to claim 8, wherein said tube includes three U-shaped portions.

## Patentansprüche

1. Kompakte Fluoreszenzlampe (10) für allgemeine Beleuchtungszwecke, mit

— einer vakuumdichten Strahlungsübertragungs-Röhre (1),
— Quecksilber und Edelgas in der Röhre,
— Elektroden (3) in der Röhre, zwischen denen eine Entladung während des Betriebs stattfindet, und
— einer Leuchtstoffschicht (2), die die Oberfläche der Röhre bedeckt, wobei die Leuchtstoffschicht ein Gemisch aus rotes, grünes und blaues Licht emittierenden Leuchtstoffen enthält,

dadurch gekennzeichnet,
daß die Röhre gefaltet ist und eine Wandbelastung im Bereich von 600—900 W/m² aufweist und daß die Leuchtstoffschicht zu zumindest 40 Gewichtsprozent aus dem rotes Licht emittierenden Leuchtstoff besteht.

2. Fluoreszenzlampe nach Anspruch 1, bei der die Leuchtstoffschicht direkt auf einer inneren Oberfläche der Röhre angeordnet ist.

3. Fluoreszenzlampe nach Anspruch 1, die desweiteren eine weitere Leuchtstoffschicht enthält, welche zwischen der Leuchtstoffschicht und der Röhre angeordnet ist.

4. Fluoreszenzlampe nach Anspruch 3, bei der die weitere Leuchtstoffschicht einen Kalzium-Halophosphat-Leuchtstoff enthält.

5. Fluoreszenzlampe nach einem der vorhergehenden Ansprüche, bei der der rotes Licht emittierende Leuchtstoff ein Yttriumoxid enthält, das durch Europium aktiviert ist.

6. Fluoreszenzlampe nach einem der vorhergehenden Ansprüche, bei der die Leuchtstoffschicht einen blaues Licht emittierenden Leuchtstoff und einen grünes Licht emittierenden Leuchtstoff enthalt.

7. Fluoreszenzlampe nach Anspruch 6, bei der der blaues Licht emittierende Leuchtstoff zumindest einer von folgenden Leuchtstoffen ist:
ein Strontium-Kalzium-Halo-Phosphat, das durch Europium aktiviert ist, Barium-Magnesium-Aluminat, das durch Europium aktiviert ist, ein Strontium-Kalzium-Barium-Halo-Boro-Phosphat, das durch Europium aktiviert ist, und Strontium-Chloro-Phosphat, das durch Europium aktiviert ist, und bei der der grünes Licht emittierende Leuchtstoff zumindest einer von folgenden Leuchtstoffen ist:
Lanthan-Phosphat, das durch Zerium und Terbium aktiviert ist, Magnesium-Aluminat, das durch Zerium und Terbium aktiviert ist, Yttrium-Silikat, das durch Zerium und Terbium aktiviert ist, und Lanthan-Siliko-Phosphat, das durch Zerium und Terbium aktiviert ist.

8. Fluoreszenzlampe nach einem der vorhergehenden Ansprüche, bei der die Röhre zumindest einen U-förmigen Abschnitt enthält.

9. Fluoreszenzlampe nach Anspruch 8, bei der die Röhre drei U-förmige Abschnitte enthält.

**Revendications**

1. Une lampe fluorescente compacte (10) destinée à l'éclairage général, comprenant: un tube transmettant le rayonnement, étanche au vide (1); du mercure et un gaz rare à l'intérieur dudit tube; des électrodes (3) dans ledit tube et entre lesquelles une décharge s'établit en fonctionnement; et une couche de luminophore (2) recouvrant une surface dudit tube, la couche de luminophore comprenant un mélange de luminophore émettant de la lumière rouge, verte et bleue, caractérisée en ce que le tube présente des circonvolutions, et sa paroi reçoit une charge comprise entre 600 et 900 watts/m² et en ce que, au moins, 40 pour cent en poids de ladite couche de luminophore sont constitués par ledit luminophore émetteur de lumière rouge.

2. Une lampe fluorescente selon la revendication 1, dans laquelle ladite couche de luminophore est directement déposée sur une surface intérieure dudit tube.

3. Une lampe fluorescente selon la revendication 1, comprenant encore une autre couche de luminophore disposée entre ladite couche de luminophore et ledit tube.

4. Une lampe fluorescent selon la revendication 3, dans laquelle ladite autre couche de luminophore comprend un luminophore à l'halophosphate de calcium.

5. Une lampe fluorescente selon l'une quelconque des revendications précédentes, dans laquelle ledit luminophore émetteur de lumière rouge comprend de l'oxyde d'yttrium activé par de l'europium.

6. Une lampe fluorescente selon l'une quelconque des revendications précédentes, dans laquelle ladite couche de luminophore comprend un luminophore émettant de la lumière bleue et un luminophore émettant de la lumière verte.

7. Une lampe fluorescente selon la revendication 6, dans laquelle ledit luminophore émettant de la lumière bleue est, au moins, l'un parmi les produits suivants: halophosphate de calcium strontium activé par de l'europium; aluminate de magnésium baryum activé par de l'europium; halo-boro-phosphate de baryum calcium strontium activé par de l'europium; et chlorophosphate de strontium activé par de l'europium, et en ce que ledit luminophore émettant de la lumière verte est l'un, au moins, des produits suivants: phosphate de lanthane activé par du cérium et du terbium; aluminate de magnésium activé par du cérium et du terbium; silicate d'yttrium activé par du cérium et du terbium; et silicophosphate de lanthane activé par du cérium et du terbium.

8. Une lampe fluorescente selon l'une quelconque des revendications précédentes, dans laquelle ledit tube comprend, au moins, une portion en forme de U.

9. Une lampe fluorescente selon la revendication 8, dans laquelle ledit tube comprend trois portions en forme de U.